# EUROPEAN PATENT APPLICATION

(11) **EP 4 836 467 A1**
(43) Date of publication of application: **04.11.2026**
(21) Application number: 23962896.9
(22) Date of filing: 29.12.2023
(51) Int. Cl.: H04W 8/22

(54) **CELL DETECTION METHOD, TERMINAL, AND STORAGE MEDIUM**

(71) Applicant: Beijing Xiaomi Mobile Software Co., Ltd., Beijing 100085 (CN)
(72) Inventor: TAO, Xuhua, Beijing 100085 (CN); HU, Ziquan, Beijing 100085 (CN)
(74) Representative: Dehns Germany Partnerschaft mbB
(86) International application number: PCT/CN2023/143568
(87) International publication number: WO 2025/138222

(57) **Abstract**

Embodiments of the present disclosure provide a cell detection method, a terminal, and a storage medium. The method is executed by the terminal. The method comprises: determining a detection capability and/or a detection behavior of a terminal on the basis of first information, wherein the first information is used for indicating a scanning capability of the terminal to scan a received signal by using different receiving beams, the detection capability is a capability of the terminal to perform a cell detection operation, and the detection behavior is a behavior of the terminal performing the cell detection operation. Thus, the technical solution provided by the embodiments of the present disclosure shortens the cell detection time of the terminal.

## Description

### TECHNICAL FIELD

The present disclosure relates to the field of communication technologies, and in particular to a cell detection method, a terminal, and a storage medium.

### BACKGROUND

In the field of communication technologies, if a terminal is instructed to report an SSB-based radio resource management (RRM) measurement result having an associated synchronization signal block (SSB, Synchronization Signal and PBCH block) index, the terminal should be able to identify, within a predetermined time period, a new detectable inter-frequency SSB of a cell that has been detected.

### SUMMARY

In related technologies, a terminal has a relatively long latency for cell detection.

According to a first aspect of embodiments of the present disclosure, a cell detection method is provided. The method is performed by a terminal, and the method includes:
determining, based on first information, a detection capability and/or a detection behavior of the terminal;
wherein the first information is used for indicating: a scanning capability of the terminal for scanning a received signal by using different receive beams; the detection capability is a capability of the terminal to perform a cell detection operation; and the detection behavior is a behavior of the terminal to perform the cell detection operation.

According to a second aspect of embodiments of the present disclosure, a terminal is provided. The terminal includes:
a processing module configured to:
determine, based on first information, a detection capability and/or a detection behavior of the terminal;
wherein the first information is used for indicating a scanning capability of the terminal for scanning a received signal by using different receive beams; the detection capability is a capability of performing a cell detection operation; and the detection behavior is a behavior of performing the cell detection operation.

According to a third aspect of embodiments of the present disclosure, a terminal is provided. The terminal includes:
one or more processors;
wherein the terminal is configured to perform the method according to the first aspect.

According to a fourth aspect of embodiments of the present disclosure, a storage medium is provided, wherein the storage medium stores instructions, and when the instructions run on a communication device, the communication device is caused to perform the method provided in the first aspect.

The technical solution provided by embodiments of the present disclosure enables the terminal to spend a shorter time on cell detection.

It should be understood that the foregoing general description and the following detailed description are merely exemplary and explanatory, and are not intended to limit embodiments of the present disclosure.

### BRIEF DESCRIPTION OF THE DRAWINGS

The accompanying drawings herein are incorporated into the specification and constitute a part of this specification, illustrate embodiments consistent with the present disclosure, and are used together with the specification to explain the principles of the embodiments of the present disclosure.
FIG. 1a is a schematic diagram of an architecture of a communication system according to an exemplary embodiment;
FIG. 2a is a schematic flowchart of a cell detection method according to an exemplary embodiment;
FIG. 3a is a schematic flowchart of a cell detection method according to an exemplary embodiment;
FIG. 4a is a schematic diagram of a terminal according to an exemplary embodiment;
FIG. 4b is a schematic diagram of a network device according to an exemplary embodiment;
FIG. 5a is a schematic structural diagram of UE according to an exemplary embodiment; and
FIG. 5b is a schematic structural diagram of a communication device according to an exemplary embodiment.

### DETAILED DESCRIPTION

Embodiments of the present disclosure provide a cell detection method, a terminal, and a storage medium.

In a first aspect, embodiments of the present disclosure provide a cell detection method. The method is performed by a terminal, and the method includes:
determining, based on first information, a detection capability and/or a detection behavior of the terminal;
wherein the first information is used for indicating: a scanning capability of the terminal for scanning a received signal by using different receive beams; the detection capability is a capability of the terminal to perform a cell detection operation; and the detection behavior is a behavior of the terminal to perform the cell detection operation.

In the foregoing embodiments, because the detection capability and/or the detection behavior of the terminal can be determined based on the first information used for indicating the scanning capability of the terminal for scanning a received signal by using different receive beams, the detection capability and/or the detection behavior of the terminal can adapt to the capability of the terminal to perform the cell detection operation.

In combination with some embodiments of the first aspect, in some embodiments, the cell detection operation includes at least one of:
synchronization-signal synchronization, wherein the synchronization signal includes a primary synchronization signal (PSS) and/or a secondary synchronization signal (SSS);
synchronization signal block (SSB) index detection; or
SSB-based measurement.

In combination with some embodiments of the first aspect, in some embodiments, determining, based on first information, a detection capability of a terminal includes:
determining the detection capability based on the first information;
wherein the detection capability includes a first time for the terminal to perform the cell detection operation. In the foregoing embodiments, the first time for the terminal to perform the cell detection operation can be determined based on the scanning capability of the terminal for scanning a received signal by using different receive beams, so that the first time for performing the cell detection operation can adapt to the scanning capability of the terminal for scanning a received signal by using different receive beams, thereby shortening the first time and reducing latency caused by cell detection.

In combination with some embodiments of the first aspect, in some embodiments, the first information is used for indicating a scanning rate of the terminal for scanning a received signal by using different receive beams.

In the foregoing embodiments, the detection capability and/or the detection behavior of the terminal can adapt to the scanning rate of the terminal for scanning a received signal by using different receive beams.

In combination with some embodiments of the first aspect, in some embodiments, determining, based on first information, a detection capability and/or a detection behavior of a terminal includes:
determining that the scanning rate is greater than a rate threshold, and determining that the first time is less than a time threshold.

In the foregoing embodiments, when the scanning rate is greater than the rate threshold, the first time can be less than the time threshold, that is, the greater the scanning rate is, the shorter the first time is.

In combination with some embodiments of the first aspect, in some embodiments, determining, based on first information, a detection capability and/or a detection behavior of a terminal includes:
determining, based on the first information, a receive-beam scanning factor associated with the terminal performing a cell detection operation;
wherein the receive-beam scanning factor is used for indicating a quantity of receive beams set for each detection sample.

In the foregoing embodiments, the receive-beam scanning factor associated with the terminal performing the cell detection operation can adapt to the scanning capability of the terminal for performing receive-beam scanning.

In combination with some embodiments of the first aspect, in some embodiments, determining, based on the first information, a receive-beam scanning factor associated with the terminal performing a cell detection operation includes at least one of:
determining, based on the first information, a first receive-beam scanning factor for the terminal to perform synchronization-signal synchronization;
determining, based on the first information, a second receive-beam scanning factor for the terminal to perform SSB index detection; or
determining, based on the first information, a third receive-beam scanning factor for the terminal to perform SSB measurement.

In the foregoing embodiments, the beam scanning factor for the terminal to perform synchronization-signal synchronization, SSB index detection, and/or SSB measurement can be determined based on the first information.

In combination with some embodiments of the first aspect, in some embodiments, the synchronization-signal synchronization includes: a first operation and a second operation; the first operation includes automatic gain control (AGC) and/or time-frequency tracking, and the second operation is synchronization signal detection; and determining, based on the first information, a first receive-beam scanning factor for the terminal to perform synchronization-signal synchronization includes at least one of:
determining, based on the first information, a first sub receive-beam scanning factor for the terminal to perform an operation associated with the first operation; or
determining, based on the first information, a second sub receive-beam scanning factor for the terminal to perform an operation associated with the second operation.

In the foregoing embodiments, the first sub receive-beam scanning factor for performing the operation associated with automatic gain control (AGC) and/or time-frequency tracking and the second sub receive-beam scanning factor for performing the operation associated with synchronization signal detection can be respectively determined based on the scanning capability of the terminal for scanning a received signal by using different receive beams.

In combination with some embodiments of the first aspect, in some embodiments, the first sub receive-beam scanning factor and the second sub receive-beam scanning factor are different.

In the foregoing embodiments, the first sub receive-beam scanning factor and the second sub receive-beam scanning factor can be set to be different, so that the setting is more flexible.

In combination with some embodiments of the first aspect, in some embodiments, the first sub receive-beam scanning factor is greater than the second sub receive-beam scanning factor.

In combination with some embodiments of the first aspect, in some embodiments, the method further includes:
determining, based on information of a receive beam for the terminal to perform the first operation, information of a receive beam for the terminal to perform the second operation.

In the foregoing embodiments, the information of the receive beam of the first operation can be applied to performing the second operation.

In combination with some embodiments of the first aspect, in some embodiments, determining, based on first information, a detection capability and/or a detection behavior of a terminal includes at least one of:
determining, based on the first information, a second time for the terminal to perform the first operation and a third time for the terminal to perform the second operation, respectively; or
determining, based on the first information, a fourth time, wherein the fourth time includes a time for the terminal to perform the first operation and perform the second operation.

In the foregoing embodiments, the second time for the terminal to perform the first operation and the third time for the terminal to perform the second operation can be determined respectively based on the first information, and the fourth time for the terminal to perform the first operation and perform the second operation can also be jointly determined based on the first information, so that the determination manners are more flexible.

In combination with some embodiments of the first aspect, in some embodiments, the SSB-based measurement includes: a third operation and a fourth operation; the third operation includes automatic gain control (AGC) and/or time-frequency tracking, and the fourth operation is SSB-based measurement; and determining, based on the first information, a third receive-beam scanning factor for the terminal to perform SSB measurement includes at least one of:
determining, based on the first information, a third sub receive-beam scanning factor for the terminal to perform an operation associated with the third operation; or
determining, based on the first information, a fourth sub receive-beam scanning factor for the terminal to perform an operation associated with the fourth operation.

In some embodiments, the third sub receive-beam scanning factor for performing the operation associated with automatic gain control (AGC) and/or time-frequency tracking and the fourth sub receive-beam scanning factor for performing the operation associated with SSB-based measurement can be respectively determined based on the scanning capability of the terminal for scanning a received signal by using different receive beams.

In combination with some embodiments of the first aspect, in some embodiments, the third sub receive-beam scanning factor and the fourth sub receive-beam scanning factor are different.

In the foregoing embodiments, the third sub receive-beam scanning factor and the fourth sub receive-beam scanning factor can be set to be different, so that the setting is more flexible.

In combination with some embodiments of the first aspect, in some embodiments, the third sub receive-beam scanning factor is greater than the fourth sub receive-beam scanning factor.

In combination with some embodiments of the first aspect, in some embodiments, the method further includes:
determining, based on information of a receive beam for the terminal to perform the third operation, information of a receive beam for the terminal to perform the fourth operation.

In the foregoing embodiments, the information of the receive beam for the terminal to perform the third operation is used for the terminal to perform the fourth operation.

In combination with some embodiments of the first aspect, in some embodiments, determining, based on first information, a detection capability and/or a detection behavior of a terminal includes at least one of:
determining, based on the first information, a fifth time for the terminal to perform the third operation and a sixth time for the terminal to perform the fourth operation, respectively; or
determining, based on the first information, a seventh time, wherein the seventh time includes a time for the terminal to perform the third operation and perform the fourth operation.

In the foregoing embodiments, the fifth time for the terminal to perform the third operation and the sixth time for the terminal to perform the fourth operation can be determined respectively based on the first information, and the common time for the terminal to perform the third operation and perform the fourth operation can also be determined based on the first information.

In combination with some embodiments of the first aspect, in some embodiments, the cell detection operation is a cell detection operation for inter-frequency frequency range 2 (FR2).

In a second aspect, embodiments of the present disclosure provide a terminal. The terminal includes:
a processing module configured to:
determine, based on first information, a detection capability and/or a detection behavior of the terminal;
wherein the first information is used for indicating a scanning capability of the terminal for scanning a received signal by using different receive beams; the detection capability is a capability of performing a cell detection operation; and the detection behavior is a behavior of performing the cell detection operation.

In a third aspect, embodiments of the present disclosure provide a terminal. The terminal includes:
one or more processors;
wherein the terminal is configured to perform the method provided in the first aspect.

In a fourth aspect, embodiments of the present disclosure provide a storage medium, wherein the storage medium stores instructions, and when the instructions run on a communication device, the communication device is caused to perform the method described in optional implementations of the first aspect.

In a fifth aspect, embodiments of the present disclosure provide a program product, wherein when the program product is executed by a communication device, the communication device is caused to perform the method described in optional implementations of the first aspect.

In a sixth aspect, embodiments of the present disclosure provide a computer program, wherein when the computer program runs on a computer, the computer is caused to perform the method described in optional implementations of the first aspect.

In a seventh aspect, embodiments of the present disclosure provide a chip or chip system. The chip or chip system includes a processing circuit configured to perform the method described in optional implementations of the first aspect.

It can be understood that the foregoing terminal, storage medium, program product, computer program, chip, or chip system is used for performing the method provided in embodiments of the present disclosure. Therefore, reference may be made to advantageous effects in the corresponding method for the advantageous effects that can be achieved, and details are not described herein again.

Embodiments of the present disclosure provide a cell detection method, a terminal, and a storage medium. In some embodiments, the cell detection method may be interchangeably referred to as an information indication method, an information processing method, an information transmission method, or the like, and a communication system, an information processing system, and the like may be interchangeably referred to.

The embodiments of the present disclosure are not exhaustive, are merely schematic examples of some embodiments, and are not intended to specifically limit the protection scope of the present disclosure. In the absence of contradiction, each step in an embodiment may be implemented as an independent embodiment, and the steps may be combined in any manner. For example, a solution obtained by removing some steps from an embodiment may also be implemented as an independent embodiment, and the order of steps in an embodiment may be exchanged in any manner. In addition, optional implementations in an embodiment may be combined in any manner. Moreover, the embodiments may be combined with one another in any manner. For example, some or all steps of different embodiments may be combined in any manner, and an embodiment may be combined with optional implementations of other embodiments in any manner.

In the embodiments of the present disclosure, unless otherwise specifically stated and unless there is a logical conflict, terms and/or descriptions among the embodiments are consistent and may be cited from one another, and technical features in different embodiments may be combined according to their internal logical relationships to form new embodiments.

The terms used in the embodiments of the present disclosure are merely for describing particular embodiments and are not intended to limit the present disclosure.

In the embodiments of the present disclosure, unless otherwise stated, an element expressed in a singular form, such as "a/an," "one," "the," "the above," "the," "the foregoing," or "this," may indicate "one and only one," or may indicate "one or more," "at least one," or the like. For example, when an article such as "a," "an," or "the" in English is used in translation, the noun following the article may be understood as a singular expression or may be understood as a plural expression.

In the embodiments of the present disclosure, "a plurality of" means two or more.

In some embodiments, terms such as "at least one of," "one or more," "a plurality of," and "multiple" may be interchangeably referred to.

In some embodiments, recitations such as "at least one of A and B," "A and/or B," "A in one case and B in another case," and "in response to one case A, in response to another case B" may, depending on the circumstances, include the following technical solutions: A in some embodiments (A is performed independently of B); B in some embodiments (B is performed independently of A); selecting from A and B for execution in some embodiments (A and B are selectively performed); and A and B in some embodiments (both A and B are performed). The same applies when there are more branches such as A, B, and C.

In some embodiments, recitations such as "A or B" may, depending on the circumstances, include the following technical solutions: A in some embodiments (A is performed independently of B); B in some embodiments (B is performed independently of A); and selecting from A and B for execution in some embodiments (A and B are selectively performed). The same applies when there are more branches such as A, B, and C.

In the embodiments of the present disclosure, prefixes such as "first" and "second" are merely used to distinguish different described objects, and do not limit a position, order, priority, quantity, content, or the like of the described objects. The statement of the described objects is subject to the context in the claims or embodiments, and no redundant limitation should be deemed to arise due to use of the prefixes. For example, when the described object is a "field," ordinal terms before "field" in "first field" and "second field" do not limit positions or an order between the "fields," and "first" and "second" do not limit whether the modified "fields" are in the same message, nor do they limit an order between the "first field" and the "second field." As another example, when the described object is a "level," ordinal terms before "level" in "first level" and "second level" do not limit priorities between the "levels." As another example, a quantity of described objects is not limited by ordinal terms, and may be one or more. Taking a "first apparatus" as an example, a quantity of the "apparatus" may be one or more. In addition, objects modified by different prefixes may be the same or different. For example, when the described object is an "apparatus," the "first apparatus" and the "second apparatus" may be the same apparatus or different apparatuses, and their types may be the same or different. As another example, when the described object is "information," the "first information" and the "second information" may be the same information or different information, and their contents may be the same or different.

In some embodiments, "including A," "comprising A," "used for indicating A," and "carrying A" may be interpreted as directly carrying A, or may be interpreted as indirectly indicating A.

In some embodiments, terms such as "in response to ...," "in response to determining ...," "in a case of ...," "when ...," "while ...," "if ...," and "where ..." may be interchangeably referred to.

In some embodiments, terms such as "greater than," "greater than or equal to," "not less than," "more than," "more than or equal to," "no less than," "higher than," "higher than or equal to," "not lower than," and "above" may be interchangeably referred to, and terms such as "less than," "less than or equal to," "not greater than," "fewer than," "fewer than or equal to," "no more than," "lower than," "lower than or equal to," "not higher than," and "below" may be interchangeably referred to.

In some embodiments, an apparatus and a device may be interpreted as physical or may be interpreted as virtual, and their names are not limited to names described in the embodiments. In some cases, they may also be understood as an "equipment," a "device," a "circuit," a "network element," a "node," a "function," a "unit," a "section," a "system," a "network," a "chip," a "chip system," an "entity," a "subject," or the like.

In some embodiments, a "network" may be interpreted as an apparatus included in the network, for example, an access network device, a core network device, or the like.

In some embodiments, an "access network device (AN device)" may also be referred to as a "radio access network device (RAN device)," a "base station (BS)," a "radio base station," or a "fixed station," and in some embodiments may also be understood as a "node," an "access point," a "transmission point (TP)," a "reception point (RP)," a "transmission/reception point (TRP)," a "panel," an "antenna panel," an "antenna array," a "cell," a "macro cell," a "small cell," a "femto cell," a "pico cell," a "sector," a "cell group," a "serving cell," a "carrier," a "component carrier," a "bandwidth part (BWP)," or the like.

In some embodiments, a "terminal" or a "terminal device" may be referred to as "user equipment (UE)," a "user terminal," a "mobile station (MS)," a "mobile terminal (MT)," a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or the like.

In some embodiments, obtaining data, information, or the like may comply with laws and regulations of the country in which the obtaining occurs.

In some embodiments, data, information, or the like may be obtained after user consent is obtained.

In addition, each element, each row, or each column in tables of embodiments of the present disclosure may be implemented as an independent embodiment, and any combination of elements, rows, or columns may also be implemented as an independent embodiment.

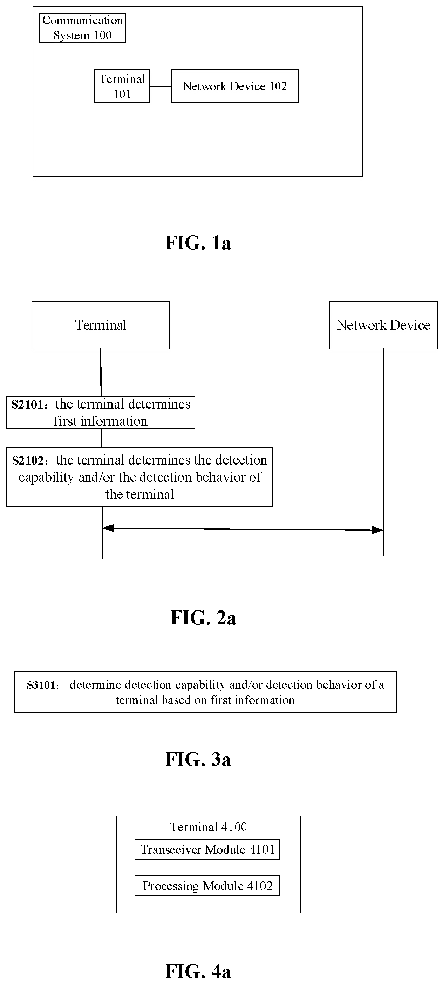

FIG. 1a is a schematic diagram of an architecture of a communication system according to an embodiment of the present disclosure.

As shown in FIG. 1a, a communication system 100 includes a terminal 101 and a network device 102.

In some embodiments, the network device 102 may include at least one of an access network device and a core network device.

In some embodiments, the terminal 101 includes, for example, at least one of a mobile phone, a wearable device, an Internet of Things device, a vehicle having a communication function, a smart vehicle, a tablet computer (Pad), a computer having a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the access network device may be, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in another communication system, and an access node in a Wi-Fi system, but is not limited thereto.

In some embodiments, the technical solution of the present disclosure may be applicable to an Open RAN architecture. In this case, interfaces between access network devices or within an access network device involved in embodiments of the present disclosure may become internal interfaces of the Open RAN, and procedures and information interaction between these internal interfaces may be implemented by software or a program.

In some embodiments, the access network device may be composed of a central unit (CU) and a distributed unit (DU), wherein the CU may also be referred to as a control unit. The CU-DU structure can split protocol layers of the access network device, place functions of some protocol layers in the CU for centralized control, and distribute functions of the remaining part or all protocol layers in the DU, with the CU centrally controlling the DU, but the present disclosure is not limited thereto.

In some embodiments, the core network device may be one device including one or more network elements, or may be a plurality of devices or device groups respectively including all or part of the one or more network elements. A network element may be virtual or physical. The core network includes, for example, at least one of an Evolved Packet Core (EPC), a 5G Core Network (5GCN), and a Next Generation Core (NGC).

It can be understood that the communication system described in embodiments of the present disclosure is intended to more clearly describe the technical solutions of embodiments of the present disclosure, and does not constitute a limitation on the technical solutions provided by embodiments of the present disclosure. A person of ordinary skill in the art can understand that, as system architectures evolve and new service scenarios appear, the technical solutions provided by embodiments of the present disclosure are also applicable to similar technical problems.

The following embodiments of the present disclosure may be applied to the communication system 100 shown in FIG. 1a or some subjects thereof, but are not limited thereto. The subjects shown in FIG. 1a are examples. The communication system may include all or some of the subjects in FIG. 1a, or may include other subjects other than those in FIG. 1a. The quantity and form of each subject are arbitrary. The connection relationships between the subjects are examples. The subjects may be connected or may not be connected. The connection may be in any manner, may be a direct connection or an indirect connection, and may be a wired connection or a wireless connection.

Each embodiment of the present disclosure may be applied to Long Term Evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a Public Land Mobile Network (PLMN) network, a Device-to-Device (D2D) system, a Machine to Machine (M2M) system, an Internet of Things (IoT) system, Vehicle-to-Everything (V2X), a system using another communication method, a next-generation system extended based on any of the foregoing, or the like. In addition, a combination of a plurality of systems, for example, a combination of LTE or LTE-A and 5G, may also be applied.

To better understand embodiments of the present disclosure, related scenarios are first described below by using some exemplary embodiments.

In some embodiments, if a terminal is instructed to report an SSB-based radio resource management (RRM) measurement result having an associated synchronization signal block (SSB, Synchronization Signal and PBCH block) index, the terminal should be able to identify, within T_{identify_inter_with_index}, a new detectable inter-frequency SSB of a cell that has been detected. T_{identify_inter_with_index} = (T_{PSS/SSS_sync_inter} + T _{SSB_measurement_period_inter} + T_{SSB_time_index_inter}) ms

The foregoing formula indicates that the terminal needs to sequentially perform three steps to detect a new cell, for example, primary synchronization signal (PSS) or secondary synchronization signal (SSS) detection, SSB index detection, and SSB-based measurement, corresponding to times T_{PSS/SSS_sync_inter}, T _{SSB_measurement_period_inter}, and T_{SSB_time_index_inter}, respectively.

In some embodiments, in each step of PSS/SSS detection, SSB index detection, and SSB-based measurement, the terminal needs to scan a received signal by using different receive beams. For example, when the receive-beam scanning factor is 8, a total latency for completing PSS/SSS detection, SSB index detection, and SSB-based measurement is very large.

In some embodiments, for frequency range 2 (FR2, Frequency range 2) L3 measurement of a new cell, the terminal needs to perform receive-beam scanning for PSS/SSS detection, SSB index detection, and SSB-based measurement.

In some embodiments, refer to Table 1. Requirements for PSS/SSS synchronization are defined as follows:

**Table 1: Time period of PSS/SSS detection (frequency range FR2)**

| **Condition ^{NOTE1,2}** | **T_{PSS/SSS_sync_inter}** |
|---|---|
| No DRX | Max(600ms, Ceil(K_{gap} × M_{pss/sss_sync_inter} x K_{FR}) × Max(MGRP , SMTC period)) × CSSFᵢₙₜₑᵣ |
| DRX cycle ≤ 320ms | Max(600ms, Ceil(1.5 * K_{gap} × M_{pss/sss_sync_inter} x K_{FR}) × Max(MGRP, SMTC period, DRX cycle)) × CSSFᵢₙₜₑᵣ |
| DRX cycle > 320ms | Ceil(K_{gap} × M_{pss/sss_sync_inter} x K_{FR}) × DRX cycle × CSSFᵢₙₜₑᵣ |
| NOTE 1: DRX or non DRX requirements apply according to the conditions described in clause 3.6.1 | |
| NOTE 2: In EN-DC operation, the parameters, timers and scheduling requests referred to in clause 3.6.1 are for the secondary cell group. The DRX cycle is the DRX cycle of the secondary cell group. | |
| NOTE 3: For a UE supporting concurrent gaps, the MRGP above is the MRGP of the measurement gap associated with the target frequency layer to be measured if concurrent measurement gaps are configured. | |
| NOTE 4: K_{FR} is a scaling factor depending on the frequency range and the SSB SCS. For FR2-1, KFR = 1. For FR2-2: KFR = 1 if the SCS of the SSB of the cell being detected is 120 kHz, KFR = 2 if the SCS of the SSB of the cell being detected is 480 kHz, and KFR = 3 if the SCS of the SSB of the cell being detected is 960 kHz. | |

In some embodiments, for Mpss/sss_sync_inter, for a terminal supporting FR2-1 power class 1 or 5, Mpss/sss_sync_inter = 64 samples. For a terminal supporting FR2-1 power class 2, Mpss/sss_sync_inter = 40 samples. For a terminal supporting FR2-1 power class 3, Mpss/sss_sync_inter = 40 samples. For a terminal supporting FR2-1 power class 4, Mpss/sss_sync_inter = 40 samples.

In some embodiments, taking FR2-1 power class 1 or 5 as an example, the terminal first performs automatic gain control (AGC) and time tracking based on SSBs (for example, based on 3 samples). Then, the terminal continues to perform SSB-based PSS/SSS detection on 5 samples. For each sample in FR2, the terminal needs to perform 8 RX beam scans. Therefore, for PSS/SSS synchronization, the total number of measurements in the related technology is 8 x 8 = 64. However, because the terminal can obtain some prior information of a receive beam (which may also be referred to as an RX beam, and the two may be interchangeable, without limitation herein) based on AGC and timing tracking, the terminal does not need 8 receive beams for PSS/SSS detection. The total latency of Mpss/sss_sync_inter can be reduced.

FIG. 2a is an interaction diagram of a cell detection method according to an embodiment of the present disclosure. As shown in FIG. 2a, embodiments of the present disclosure relate to a cell detection method, which is used in the communication system 100. The method includes the following steps.

Step S2101: The terminal determines first information.

In some embodiments, the first information is used for indicating: a scanning capability of the terminal for scanning a received signal by using different receive beams.

In some embodiments, the first information is used for indicating: a scanning rate of the terminal for scanning a received signal by using different receive beams.

It should be noted that the scanning capability indicates a capability of scanning a received signal by using different receive beams during execution of the cell detection operation. For example, the scanning capability indicates a speed and/or a time used for scanning a received signal by using different receive beams during synchronization-signal synchronization and/or SSB-based measurement.

Step S2102: The terminal determines the detection capability and/or the detection behavior of the terminal.

In some embodiments, the detection capability is a capability of the terminal to perform a cell detection operation.

In some embodiments, the detection behavior is a behavior of the terminal to perform a cell detection operation.

In some embodiments, a process of cell detection includes performing at least one detection behavior. Each detection behavior may be determined based on the detection capability, and the detection capability may include a scanning capability of scanning a received signal by using different receive beams during the detection behavior.

In some embodiments, the cell detection operation includes at least one of:
synchronization-signal synchronization, wherein the synchronization signal includes a primary synchronization signal (PSS) and/or a secondary synchronization signal (SSS);
synchronization signal block (SSB) index detection; or
SSB-based measurement.

In some embodiments, synchronization-signal synchronization, synchronization signal block (SSB) index detection, and SSB-based measurement may be performed sequentially.

In some embodiments, the terminal can identify a detectable new inter-frequency cell within Tidentify_inter_ with _index.

For example, T_{identify_inter_ with_index} = (T_{PSS/SSS_sync_inter} + T _{SSB_measurement_period_inter} + T_{SSB_time_index_inter}) ms.

Herein, T_{PSS/SSS_sync_inter} corresponds to a time of synchronization-signal synchronization, T _{SSB_measurement_period_inter} corresponds to a time of SSB index detection, and T_{SSB_time_index_inter} corresponds to a time of SSB-based measurement.

In some embodiments, the first time for the terminal to perform the cell detection operation is determined based on the first information.

In some embodiments, the detection capability is determined based on the first information; wherein the detection capability includes a first time for the terminal to perform the cell detection operation.

In some embodiments, it is determined that the scanning rate is greater than a rate threshold, and it is determined that the first time is less than a time threshold. It can be understood that a greater scanning rate corresponds to a smaller first time.

In some embodiments, in a case where the scanning rate is greater than the rate threshold, the first time is determined to be less than the time threshold; or, in response to the scanning rate being greater than the rate threshold, the first time is less than the time threshold.

In some embodiments, for an inter-frequency FR2 new cell detection requirement, if the terminal can perform faster receive-beam scanning, a new terminal capability can be defined, namely, when the terminal supports a faster receive-beam scanning capability, a shorter cell identification time (corresponding to the first time) can be set.

In some embodiments, a receive-beam scanning factor associated with the terminal performing a cell detection operation is determined based on the first information.

In some embodiments, the receive-beam scanning factor is used for indicating a quantity of receive beams set for each detection sample.

In some embodiments, a first receive-beam scanning factor for the terminal to perform synchronization-signal synchronization is determined based on the first information.

In some embodiments, a second receive-beam scanning factor for the terminal to perform SSB index detection is determined based on the first information.

In some embodiments, a third receive-beam scanning factor for the terminal to perform SSB measurement is determined based on the first information.

In some embodiments, the synchronization-signal synchronization includes: a first operation and a second operation; the first operation includes automatic gain control (AGC) and/or time-frequency tracking, and the second operation is synchronization signal detection; and a first sub receive-beam scanning factor for the terminal to perform an operation associated with the first operation is determined based on the first information.

In some embodiments, the synchronization-signal synchronization includes: a first operation and a second operation; the first operation includes automatic gain control (AGC) and/or time-frequency tracking, and the second operation is synchronization signal detection; and a second sub receive-beam scanning factor for the terminal to perform an operation associated with the second operation is determined based on the first information.

In some embodiments, the first sub receive-beam scanning factor and the second sub receive-beam scanning factor are different.

In some embodiments, the first sub receive-beam scanning factor is greater than the second sub receive-beam scanning factor.

For example, for PSS/SSS synchronization, there are two sub-steps: AGC/timing tracking (corresponding to the first operation) and PSS/SSS detection (corresponding to the second operation). In a solution different from the present disclosure, for the two steps, it is assumed that the same receive-beam scanning factor (for example, 8) is set. If the terminal supports a new and faster beam scanning capability, the receive-beam scanning factors of the two sub-steps may be set differently, that is, the receive-beam scanning factor for the second step (for example, PSS/SSS detection) may be less than 8.

It should be noted that the reason for the foregoing example is as follows: after receive-beam scanning in the first step, the terminal determines which receive beam is most suitable for the new cell. Then, for subsequent PSS/SSS detection, because the terminal already has information of the receive beam based on previous AGC and time-frequency tracking, fewer receive beams may be applied. For example, the receive-beam scanning factor may be reduced to 5. Then the total SSB samples are 3 x 8 + 5 x 5 = 49 samples. It should be noted that 5 herein is only an example of the receive-beam scanning factor. Then the total samples are reduced from 64 samples to 49 samples. Assuming that an SSB-based measurement timing configuration (SMTC, An SSB-based measurement timing configuration) period is 160 milliseconds, the reduced cell detection time is 15 x 160 milliseconds = 2400 milliseconds.

In some embodiments, information of a receive beam for the terminal to perform the second operation is determined based on information of a receive beam for the terminal to perform the first operation.

In some embodiments, a second time for the terminal to perform the first operation and a third time for the terminal to perform the second operation are respectively determined based on the first information.

For example, separate delays (that is, the second time and the third time) are separately specified for AGC and PSS/SSS detection.

In some embodiments, a fourth time is determined based on the first information, wherein the fourth time includes a time for the terminal to perform the first operation and perform the second operation.

For example, a total latency (that is, the fourth time) is specified for AGC and PSS/SSS detection.

In some embodiments, the SSB-based measurement includes: a third operation and a fourth operation; the third operation includes automatic gain control (AGC) and/or time-frequency tracking, and the fourth operation is SSB-based measurement; and a third sub receive-beam scanning factor for the terminal to perform an operation associated with the third operation is determined based on the first information.

In some embodiments, the SSB-based measurement includes: a third operation and a fourth operation; the third operation includes automatic gain control (AGC) and/or time-frequency tracking, and the fourth operation is SSB-based measurement; and a fourth sub receive-beam scanning factor for the terminal to perform an operation associated with the fourth operation is determined based on the first information.

In some embodiments, the third sub receive-beam scanning factor and the fourth sub receive-beam scanning factor are different.

In some embodiments, the third sub receive-beam scanning factor is greater than the fourth sub receive-beam scanning factor.

In some embodiments, information of a receive beam for the terminal to perform the fourth operation is determined based on information of a receive beam for the terminal to perform the third operation.

In some embodiments, a fifth time for the terminal to perform the third operation and a sixth time for the terminal to perform the fourth operation are respectively determined based on the first information.

In some embodiments, a seventh time is determined based on the first information, wherein the seventh time includes a time for the terminal to perform the third operation and perform the fourth operation.

In some embodiments, the cell detection operation is a cell detection operation for inter-frequency frequency range 2 (FR2).

The following uses some exemplary embodiments to describe the receive-beam scanning factor by way of example, but the present disclosure is not limited thereto.

For example, refer to Table 2, which shows an inter-frequency measurement with a gap:

**Table 2: Time period corresponding to PSS/SSS detection (FR2)**

| **Condition ^{NOTE1,2}** | **T_{PSS/SSS_sync_inter}** |
|---|---|
| No DRX | Max(600ms, Ceil(K_{gap} × (M_{AGC_inter}+M_{pss/sss_sync_inter} x K_{FR}) × Max(MGRP , SMTC period)) × CSSFᵢₙₜₑᵣ |
| DRX cycle ≤ 320ms | Max(600ms, Ceil(1.5 * K_{gap} × (M_{AGC_inter}+M_{pss/sss_sync_inter})x K_{FR}) × Max(MGRP, SMTC period, DRX cycle)) × CSSFᵢₙₜₑᵣ |
| DRX cycle > 320ms | Ceil(K_{gap} × (M_{AGC_inter}+M_{pss/sss_sync_inter} ) × K_{FR}) × DRX cycle × CSSFᵢₙₜₑᵣ |
| NOTE 1: DRX or non DRX requirements apply according to the conditions described in clause 3.6.1 | |
| NOTE 2: In EN-DC operation, the parameters, timers and scheduling requests referred to in clause 3.6.1 are for the secondary cell group. The DRX cycle is the DRX cycle of the secondary cell group. | |
| NOTE 3: For a UE supporting concurrent gaps, the MRGP above is the MRGP of the measurement gap associated with the target frequency layer to be measured if concurrent measurement gaps are configured. | |
| NOTE 4: K_{FR} is a scaling factor depending on the frequency range and the SSB SCS. For FR2-1, KFR = 1. For FR2-2: KFR = 1 if the SCS of the SSB of the cell being detected is 120 kHz, KFR = 2 if the SCS of the SSB of the cell being detected is 480 kHz, and KFR = 3 if the SCS of the SSB of the cell being detected is 960 kHz. | |

In some embodiments, for M_{AGC_inter}: for a terminal supporting FR2-1 power class 1 or 5, Mpss/sss_sync_inter = 3 x 8 samples.

In some embodiments, for Mpss/sss_sync_inter: for a terminal supporting FR2-1 power class 1 or 5, Mpss/sss_sync_inter = 5 x N1 samples. Herein, N1 is a receive-beam scanning factor in the PSS/SSS detection step.

For example, refer to Table 3, which shows an inter-frequency measurement with a gap:

**Table 3: Time period corresponding to PSS/SSS detection (FR2)**

| **Condition ^{NOTE1,2}** | **T_{PSS/SSS_sync_inter}** |
|---|---|
| No DRX | Max(600ms, Ceil(K_{gap} × M_{pss/sss_sync_inter} x K_{FR}) × Max(MGRP , SMTC period)) × CSSFᵢₙₜₑᵣ |
| DRX cycle ≤ 320ms | Max(600ms, Ceil(1.5 * K_{gap} × M_{pss/sss_sync_inter} x K_{FR}) × Max(MGRP, SMTC period, DRX cycle)) × CSSFᵢₙₜₑᵣ |
| DRX cycle > 320ms | Ceil(K_{gap} × M_{pss/sss_sync_inter} x K_{FR}) × DRX cycle × CSSFᵢₙₜₑᵣ |
| NOTE 1: DRX or non DRX requirements apply according to the conditions described in clause 3.6.1 | |
| NOTE 2: In EN-DC operation, the parameters, timers and scheduling requests referred to in clause 3.6.1 are for the secondary cell group. The DRX cycle is the DRX cycle of the secondary cell group. | |
| NOTE 3: For a UE supporting concurrent gaps, the MRGP above is the MRGP of the measurement gap associated with the target frequency layer to be measured if concurrent measurement gaps are configured. | |
| NOTE 4: K_{FR} is a scaling factor depending on the frequency range and the SSB SCS. For FR2-1, KFR = 1. For FR2-2: KFR = 1 if the SCS of the SSB of the cell being detected is 120 kHz, KFR = 2 if the SCS of the SSB of the cell being detected is 480 kHz, and KFR = 3 if the SCS of the SSB of the cell being detected is 960 kHz. | |

In some embodiments, for Mpss/sss_sync_inter: for a terminal supporting FR2-1 power class 1 or 5, Mpss/sss_sync_inter = [N] samples. Herein, N is less than 64.

In some embodiments, N = 3 x 8 + 5 x N1, wherein N1 is the receive-beam scanning factor for the PSS/SSS detection step.

For example, the terminal behavior having a smaller receive-beam scanning factor may also be applied to inter-frequency measurement having a network controlled small gap (NCSG, Network Controlled Small Gap). Refer to Table 4, which shows a time period for detecting PSS/SSS using NCSG (FR2):

**Table 4: Time period corresponding to detecting PSS/SSS using NCSG (FR2)**

| **Condition ^{NOTE1,2}** | **T_{PSS/SSS_sync_inter}** |
|---|---|
| No DRX | Max(600ms, M_{pss/sss sync inter} × Max(VIRP, SMTC period)) × CSSFᵢₙₜₑᵣ |
| DRX cycle ≤ 320ms | Max(600ms, (1.5 × M_{pss/sss_sync_inter}) × Max(VIRP, SMTC period, DRX cycle)) × CSSFᵢₙₜₑᵣ |
| DRX cycle > 320ms | M_{pss/sss sync inter} × DRX cycle × CSSFᵢₙₜₑᵣ |
| NOTE 1: DRX or non DRX requirements apply according to the conditions described in clause 3.6.1 | |
| NOTE 2: In EN-DC operation, the parameters, timers and scheduling requests referred to in clause 3.6.1 are for the secondary cell group. The DRX cycle is the DRX cycle of the secondary cell group. | |

In some embodiments, for Mpss/sss_sync_inter, for a terminal supporting FR2 power class 1 or 5, Mpss/sss_sync_inter = [N] samples. Herein, N is less than 64.

In some embodiments, N may be: N = 3 x 8 + 5 x N2, wherein N2 is a receive-beam scanning factor for the time index detection step.

In some embodiments, if receive-beam scanning information has been reduced in a previous step, a smaller receive-beam scanning factor may be applied.

For example, refer to Table 5, which is applied to SSB index detection and SSB-based measurement in inter-frequency measurement with a gap or inter-frequency measurement with NCSG:

**Table 5: Time period for time index detection (frequency range FR2)**

| **Condition ^{NOTE1,2}** | **T_{SSB_ time_index_inter}** |
|---|---|
| No DRX | Max(200ms, Ceil(K_{gap} × M_{SSB index inter}) × Max(MGRP, SMTC period)) × CSSFᵢₙₜₑᵣ |
| DRX cycle ≤ 320ms | Max(200ms, Ceil(1.5 * K_{gap} × M_{SSB_index_inter}) × Max(MGRP, SMTC period, DRX cycle)) × CSSFᵢₙₜₑᵣ |
| DRX cycle > 320ms | Ceil(K_{gap} × M_{SSB intex inter}) × DRX cycle × CSSFᵢₙₜₑᵣ |
| NOTE 1: DRX or non DRX requirements apply according to the conditions described in clause 3.6.1 | |
| NOTE 2: In EN-DC operation, the parameters, timers and scheduling requests referred to in clause 3.6.1 are for the secondary cell group. The DRX cycle is the DRX cycle of the secondary cell group. | |
| NOTE 3: For a UE supporting concurrent gaps, the MRGP above is the MRGP of the measurement gap associated with the target frequency layer to be measured if concurrent measurement gaps are configured. | |

In some embodiments, for MSSB_index_inter: for UE supporting FR2-1 power class 1 or 5, MSSB_index_inter = [N] samples. Herein, N is less than 40.

In some embodiments, N = 3 x 8 + 2 x N2, wherein N2 is the receive-beam scanning factor for the time index detection step.

For example, refer to Table 6, which shows a measurement period of inter-frequency measurement with a gap (frequency FR2).

**Table 6: Measurement period of inter-frequency measurement with a gap (frequency FR2)**

| **Condition ^{NOTE1,2}** | **T _{SSB_measurement_period_inter}** |
|---|---|
| No DRX | Max(400ms, Ceil(K_{gap} × M_{meas period inter}) × Max(MGRP , SMTC period)) × CSSFᵢₙₜₑᵣ |
| DRX cycle ≤ 320ms | Max(400ms, Ceil(1.5 * K_{gap} × M_{meas_period_inter}) × Max(MGRP, SMTC period, DRX cycle)) × CSSFᵢₙₜₑᵣ |
| DRX cycle > 320ms | Ceil(K_{gap} × M_{meas period inter}) × DRX cycle × CSSFᵢₙₜₑᵣ |
| NOTE 1: DRX or non DRX requirements apply according to the conditions described in clause 3.6.1 | |
| NOTE 2: In EN-DC operation, the parameters, timers and scheduling requests referred to in clause 3.6.1 are for the secondary cell group. The DRX cycle is the DRX cycle of the secondary cell group. | |
| NOTE 3: For a UE supporting concurrent gaps, the MRGP above is the MRGP of the measurement gap associated with the target frequency layer to be measured if concurrent measurement gaps are configured. | |

In some embodiments, for Mmeas_period_inter: for UE supporting FR2-1 power class 1 or 5, Mmeas_period_inter = [N]. Herein, N is less than 64.

In some embodiments, N may be: N = 3 x 8 + 2 x N3, wherein N3 is a receive-beam scanning factor of the measurement step.

In some embodiments, the term "information" may be interchangeably referred to as a "message," "signal," "signaling," "report," "configuration," "indication," "instruction," "command," "channel," "parameter," "field," "data," or the like.

In some embodiments, the term "sending" may be interchangeably referred to as "transmitting," "reporting," "transferring," or the like.

The information indication method involved in embodiments of the present disclosure may include at least one of step S2101 and step S2102. For example, step S2101 may be implemented as an independent embodiment, and step S2102 may be implemented as an independent embodiment, but the present disclosure is not limited thereto.

FIG. 3a is a schematic flowchart of a cell detection method according to an embodiment of the present disclosure. As shown in FIG. 3a, embodiments of the present disclosure relate to a cell detection method performed by a terminal. The method includes the following step.

Step S3101: A detection capability and/or a detection behavior of a terminal is determined based on first information.

In some embodiments, the first information is used for indicating: a scanning capability of the terminal to perform scanning of a received signal by using different receive beams; the detection capability is a capability of the terminal to perform a cell detection operation; and the detection behavior is a behavior of the terminal to perform the cell detection operation.

In some embodiments, optional implementations of step S3101 may refer to optional implementations of step S2102 in FIG. 2a and other associated parts in the embodiments related to FIG. 2a, and details are not described herein again.

In some embodiments, the cell detection operation includes at least one of:
synchronization-signal synchronization, wherein the synchronization signal includes a primary synchronization signal (PSS) and/or a secondary synchronization signal (SSS);
synchronization signal block (SSB) index detection; or
SSB-based measurement.

In some embodiments, determining, based on first information, a detection capability of a terminal includes:
determining the detection capability based on the first information;
wherein the detection capability includes a first time for the terminal to perform the cell detection operation.

In some embodiments, the first information is used for indicating: a scanning rate of the terminal for scanning a received signal by using different receive beams.

In some embodiments, determining, based on first information, a detection capability and/or a detection behavior of a terminal includes:
determining that the scanning rate is greater than a rate threshold, and determining that the first time is less than a time threshold.

In some embodiments, determining, based on first information, a detection capability and/or a detection behavior of a terminal includes:
determining, based on the first information, a receive-beam scanning factor associated with the terminal performing a cell detection operation;
wherein the receive-beam scanning factor is used for indicating a quantity of receive beams set for each detection sample.

In some embodiments, determining, based on the first information, a receive-beam scanning factor associated with the terminal performing a cell detection operation includes at least one of:
determining, based on the first information, a first receive-beam scanning factor for the terminal to perform synchronization-signal synchronization;
determining, based on the first information, a second receive-beam scanning factor for the terminal to perform SSB index detection; or
determining, based on the first information, a third receive-beam scanning factor for the terminal to perform SSB measurement.

In some embodiments, the synchronization-signal synchronization includes: a first operation and a second operation; the first operation includes automatic gain control (AGC) and/or time-frequency tracking, and the second operation is synchronization signal detection; and determining, based on the first information, a first receive-beam scanning factor for the terminal to perform synchronization-signal synchronization includes at least one of:
determining, based on the first information, a first sub receive-beam scanning factor for the terminal to perform an operation associated with the first operation; or
determining, based on the first information, a second sub receive-beam scanning factor for the terminal to perform an operation associated with the second operation.

In some embodiments, the first sub receive-beam scanning factor and the second sub receive-beam scanning factor are different.

In some embodiments, the first sub receive-beam scanning factor is greater than the second sub receive-beam scanning factor.

In some embodiments, the method further includes:
determining, based on information of a receive beam for the terminal to perform the first operation, information of a receive beam for the terminal to perform the second operation.

In some embodiments, determining, based on first information, a detection capability and/or a detection behavior of a terminal includes at least one of:
determining, based on the first information, a second time for the terminal to perform the first operation and a third time for the terminal to perform the second operation, respectively; or
determining, based on the first information, a fourth time, wherein the fourth time includes a time for the terminal to perform the first operation and perform the second operation.

In some embodiments, the SSB-based measurement includes: a third operation and a fourth operation; the third operation includes automatic gain control (AGC) and/or time-frequency tracking, and the fourth operation is SSB-based measurement; and determining, based on the first information, a third receive-beam scanning factor for the terminal to perform SSB measurement includes at least one of:
determining, based on the first information, a third sub receive-beam scanning factor for the terminal to perform an operation associated with the third operation; or
determining, based on the first information, a fourth sub receive-beam scanning factor for the terminal to perform an operation associated with the fourth operation.

In some embodiments, the third sub receive-beam scanning factor and the fourth sub receive-beam scanning factor are different.

In some embodiments, the third sub receive-beam scanning factor is greater than the fourth sub receive-beam scanning factor.

In some embodiments, the method further includes:
determining, based on information of a receive beam for the terminal to perform the third operation, information of a receive beam for the terminal to perform the fourth operation.

In some embodiments, determining, based on first information, a detection capability and/or a detection behavior of a terminal includes at least one of:
determining, based on the first information, a fifth time for the terminal to perform the third operation and a sixth time for the terminal to perform the fourth operation, respectively; or
determining, based on the first information, a seventh time, wherein the seventh time includes a time for the terminal to perform the third operation and perform the fourth operation.

In some embodiments, the cell detection operation is a cell detection operation for inter-frequency frequency range 2 (FR2).

Embodiments of the present disclosure further provide apparatuses for implementing any of the foregoing methods. For example, an apparatus is provided, and the apparatus includes units or modules for implementing steps performed by the terminal in any of the foregoing methods. As another example, another apparatus is further provided, and the other apparatus includes units or modules for implementing steps performed by a network device (for example, an access network device, a core network function node, a core network device, or the like) in any of the foregoing methods.

It should be understood that division of the units or modules in the foregoing apparatus is merely logical function division. In actual implementation, all or part of the units or modules may be integrated into one physical entity, or may be physically separated. In addition, the units or modules in the apparatus may be implemented in a form in which a processor invokes software. For example, the apparatus includes a processor, the processor is connected to a memory, the memory stores instructions, and the processor invokes the instructions stored in the memory to implement any of the foregoing methods or implement functions of the units or modules of the foregoing apparatus. The processor is, for example, a general-purpose processor such as a central processing unit (CPU) or a microprocessor, and the memory is a memory inside the apparatus or a memory outside the apparatus. Alternatively, the units or modules in the apparatus may be implemented in a form of hardware circuits, and functions of some or all units or modules may be implemented by designing hardware circuits. The hardware circuits may be understood as one or more processors. For example, in one implementation, the hardware circuits are application-specific integrated circuits (ASICs), and functions of some or all units or modules are implemented by designing logical relationships of elements in the circuits. As another example, in another implementation, the hardware circuits may be implemented by a programmable logic device (PLD). Taking a Field Programmable Gate Array (FPGA) as an example, the FPGA may include a large quantity of logic gate circuits, and connection relationships between the logic gate circuits are configured by using a configuration file, so as to implement functions of some or all units or modules. All units or modules of the foregoing apparatus may all be implemented in a form in which a processor invokes software, may all be implemented in a form of hardware circuits, or may be partially implemented in a form in which a processor invokes software and partially implemented in a form of hardware circuits.

In embodiments of the present disclosure, a processor is a circuit having a signal processing capability. In one implementation, the processor may be a circuit having an instruction reading and running capability, for example, a central processing unit (CPU), a microprocessor, a graphics processing unit (GPU) (which may be understood as a microprocessor), or a digital signal processor (DSP). In another implementation, the processor may implement a certain function by logical relationships of hardware circuits, and the logical relationships of the hardware circuits are fixed or may be reconfigured. For example, the processor is a hardware circuit implemented by an application-specific integrated circuit (ASIC) or a programmable logic device (PLD), such as an FPGA. In a reconfigurable hardware circuit, a process in which the processor loads a configuration file to implement hardware circuit configuration may be understood as a process in which the processor loads instructions to implement functions of some or all units or modules. In addition, the processor may be a hardware circuit designed for artificial intelligence, which may be understood as an ASIC, for example, a Neural Network Processing Unit (NPU), a Tensor Processing Unit (TPU), or a Deep learning Processing Unit (DPU).

FIG. 4a is a schematic structural diagram of a terminal provided in an embodiment of the present disclosure. As shown in FIG. 4a, a terminal 4100 may include at least one of a transceiver module 4101, a processing module 4102, and the like. In some embodiments, the transceiver module 4101 is configured to receive and transmit information. Optionally, the transceiver module 4101 is configured to perform at least one of communication steps such as sending and/or receiving performed by the terminal in any of the foregoing methods, and details are not described herein again. Optionally, the processing module 4102 is configured to perform at least one of other steps performed by the terminal in any of the foregoing methods, and details are not described herein again.

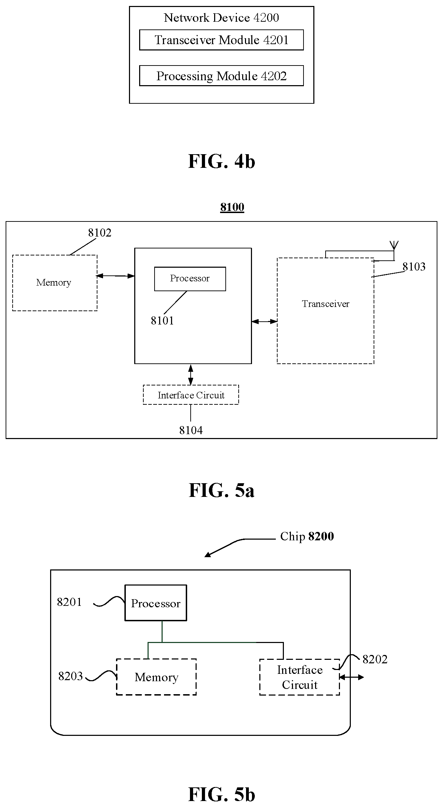

FIG. 4b is a schematic structural diagram of a network device provided in an embodiment of the present disclosure. As shown in FIG. 4b, a network device 4200 may include at least one of a transceiver module 4201, a processing module 4202, and the like. In some embodiments, the transceiver module 4201 is configured to receive and transmit information. Optionally, the transceiver module 4201 is configured to perform at least one of communication steps such as sending and/or receiving performed by the network device in any of the foregoing methods, and details are not described herein again. Optionally, the processing module 4202 is configured to perform at least one of other steps performed by the network device in any of the foregoing methods, and details are not described herein again.

FIG. 5a is a schematic structural diagram of a communication device 8100 provided in an embodiment of the present disclosure. The communication device 8100 may be a network device (for example, an access network device, a core network device, or the like), may be a terminal (for example, user equipment or the like), may be a chip, chip system, processor, or the like that supports the network device in implementing any of the foregoing methods, or may be a chip, chip system, processor, or the like that supports the terminal in implementing any of the foregoing methods. The communication device 8100 may be used for implementing the methods described in the foregoing method embodiments, and details may refer to descriptions in the foregoing method embodiments.

As shown in FIG. 5a, the communication device 8100 includes one or more processors 8101. The processor 8101 may be a general-purpose processor, a dedicated processor, or the like, for example, may be a baseband processor or a central processor. The baseband processor may be used for processing a communication protocol and communication data, and the central processor may be used for controlling a communication apparatus (such as a base station, a baseband chip, a terminal device, a terminal device chip, a DU, or a CU), executing a program, and processing data of the program. The communication device 8100 is configured to perform any of the foregoing methods.

In some embodiments, the communication device 8100 further includes one or more memories 8102 configured to store instructions. Optionally, all or part of the memory 8102 may also be outside the communication device 8100.

In some embodiments, the communication device 8100 further includes one or more transceivers 8103. When the communication device 8100 includes one or more transceivers 8103, the transceiver 8103 performs at least one of communication steps such as sending and/or receiving in the foregoing methods, and the processor 8101 performs at least one of other steps.

In some embodiments, a transceiver may include a receiver and/or a transmitter, and the receiver and the transmitter may be separated or may be integrated together. Optionally, terms such as transceiver, transceiver unit, transceiver machine, and transceiver circuit may be interchangeably referred to; terms such as transmitter, transmitting unit, transmitting machine, and transmitting circuit may be interchangeably referred to; and terms such as receiver, receiving unit, receiving machine, and receiving circuit may be interchangeably referred to.

In some embodiments, the communication device 8100 may include one or more interface circuits 8104. Optionally, the interface circuit 8104 is connected to the memory 8102. The interface circuit 8104 may be used for receiving a signal from the memory 8102 or another apparatus, and may be used for sending a signal to the memory 8102 or another apparatus. For example, the interface circuit 8104 may read instructions stored in the memory 8102 and send the instructions to the processor 8101.

The communication device 8100 described in the foregoing embodiments may be a network device or a terminal. However, the scope of the communication device 8100 described in the present disclosure is not limited thereto, and the structure of the communication device 8100 may not be limited by FIG. 5a. The communication device may be an independent device or may be a part of a larger device. For example, the communication device may be: (1) an independent integrated circuit (IC), a chip, or a chip system or subsystem; (2) a set having one or more ICs, wherein optionally the IC set may also include a storage component for storing data and a program; (3) an ASIC, such as a modem; (4) a module that can be embedded in another device; (5) a receiver, a terminal device, a smart terminal device, a cellular phone, a wireless device, a handset, a mobile unit, an in-vehicle device, a network device, a cloud device, an artificial intelligence device, or the like; or (6) other devices, and the like.

FIG. 5b is a schematic structural diagram of a chip 8200 provided in an embodiment of the present disclosure. In a case where the communication device 8100 may be a chip or chip system, reference may be made to the schematic structural diagram of the chip 8200 shown in FIG. 5b, but the present disclosure is not limited thereto.

The chip 8200 includes one or more processors 8201, and the chip 8200 is configured to perform any of the foregoing methods.

In some embodiments, the chip 8200 further includes one or more interface circuits 8202. Optionally, the interface circuit 8202 is connected to a memory 8203. The interface circuit 8202 may be used for receiving a signal from the memory 8203 or another apparatus, and the interface circuit 8202 may be used for sending a signal to the memory 8203 or another apparatus. For example, the interface circuit 8202 may read instructions stored in the memory 8203 and send the instructions to the processor 8201.

In some embodiments, the interface circuit 8202 performs at least one of communication steps such as sending and/or receiving in the foregoing methods (for example, step S2101 and step S3101, but not limited thereto), and the processor 8201 performs at least one of other steps.

In some embodiments, terms such as interface circuit, interface, transceiver pin, and transceiver may be interchangeably referred to.

In some embodiments, the chip 8200 further includes one or more memories 8203 configured to store instructions. Optionally, all or part of the memory 8203 may be outside the chip 8200.

The present disclosure further provides a storage medium. The storage medium stores instructions, and when the instructions run on the communication device 8100, the communication device 8100 is caused to perform any of the foregoing methods. Optionally, the storage medium is an electronic storage medium. Optionally, the storage medium is a computer-readable storage medium, but is not limited thereto, and may also be a storage medium readable by another apparatus. Optionally, the storage medium may be a non-transitory storage medium, but is not limited thereto, and may also be a transitory storage medium.

The present disclosure further provides a program product. When the program product is executed by the communication device 8100, the communication device 8100 is caused to perform any of the foregoing methods. Optionally, the program product is a computer program product.

The present disclosure further provides a computer program, wherein when the computer program runs on a computer, the computer is caused to perform any of the foregoing methods.

## Claims

1. A cell detection method, wherein the method is performed by a terminal, and the method comprises:
determining, based on first information, a detection capability and/or a detection behavior of the terminal;
wherein the first information is used for indicating: a scanning capability of the terminal for scanning a received signal by using different receive beams; the detection capability is a capability of the terminal to perform a cell detection operation; and the detection behavior is a behavior of the terminal to perform the cell detection operation.

2. The method according to claim 1, wherein the cell detection operation comprises at least one of:
synchronization-signal synchronization, wherein the synchronization signal comprises a primary synchronization signal (PSS) and/or a secondary synchronization signal (SSS);
synchronization signal block (SSB) index detection; or
SSB-based measurement.

3. The method according to claim 1 or claim 2, wherein
the detection capability comprises a first time for the terminal to perform the cell detection operation.

4. The method according to claim 1, wherein the first information is used for indicating: a scanning rate of the terminal for scanning a received signal by using different receive beams.

5. The method according to claim 4, wherein determining, based on first information, a detection capability and/or a detection behavior of the terminal comprises:
determining that the scanning rate is greater than a rate threshold, and determining that the first time is less than a time threshold.

6. The method according to claim 1, wherein determining, based on first information, a detection capability and/or a detection behavior of the terminal comprises:
determining, based on the first information, a receive-beam scanning factor associated with the terminal performing a cell detection operation;
wherein the receive-beam scanning factor is used for indicating a quantity of receive beams set for each detection sample.

7. The method according to claim 6, wherein determining, based on the first information, a receive-beam scanning factor associated with the terminal performing a cell detection operation comprises at least one of:
determining, based on the first information, a first receive-beam scanning factor for the terminal to perform synchronization-signal synchronization;
determining, based on the first information, a second receive-beam scanning factor for the terminal to perform SSB index detection; or
determining, based on the first information, a third receive-beam scanning factor for the terminal to perform SSB measurement.

8. The method according to claim 7, wherein the synchronization-signal synchronization comprises: a first operation and a second operation; the first operation comprises automatic gain control (AGC) and/or time-frequency tracking, and the second operation is synchronization signal detection; and determining, based on the first information, a first receive-beam scanning factor for the terminal to perform synchronization-signal synchronization comprises at least one of:
determining, based on the first information, a first sub receive-beam scanning factor for the terminal to perform an operation associated with the first operation; or
determining, based on the first information, a second sub receive-beam scanning factor for the terminal to perform an operation associated with the second operation.

9. The method according to claim 8, wherein the first sub receive-beam scanning factor and the second sub receive-beam scanning factor are different.

10. The method according to claim 9, wherein the first sub receive-beam scanning factor is greater than the second sub receive-beam scanning factor.

11. The method according to claim 8, wherein the method further comprises:
determining, based on information of a receive beam for the terminal to perform the first operation, information of a receive beam for the terminal to perform the second operation.

12. The method according to claim 8, wherein determining, based on first information, a detection capability and/or a detection behavior of the terminal comprises at least one of:
determining, based on the first information, a second time for the terminal to perform the first operation and a third time for the terminal to perform the second operation, respectively; or
determining, based on the first information, a fourth time, wherein the fourth time comprises a time for the terminal to perform the first operation and perform the second operation.

13. The method according to claim 7, wherein the SSB-based measurement comprises: a third operation and a fourth operation; the third operation comprises automatic gain control (AGC) and/or time-frequency tracking, and the fourth operation is SSB-based measurement; and determining, based on the first information, a third receive-beam scanning factor for the terminal to perform SSB measurement comprises at least one of:
determining, based on the first information, a third sub receive-beam scanning factor for the terminal to perform an operation associated with the third operation; or
determining, based on the first information, a fourth sub receive-beam scanning factor for the terminal to perform an operation associated with the fourth operation.

14. The method according to claim 13, wherein the third sub receive-beam scanning factor and the fourth sub receive-beam scanning factor are different.

15. The method according to claim 14, wherein the third sub receive-beam scanning factor is greater than the fourth sub receive-beam scanning factor.

16. The method according to claim 13, wherein the method further comprises:
determining, based on information of a receive beam for the terminal to perform the third operation, information of a receive beam for the terminal to perform the fourth operation.

17. The method according to claim 13, wherein determining, based on first information, a detection capability and/or a detection behavior of the terminal comprises at least one of:
determining, based on the first information, a fifth time for the terminal to perform the third operation and a sixth time for the terminal to perform the fourth operation, respectively; or
determining, based on the first information, a seventh time, wherein the seventh time comprises a time for the terminal to perform the third operation and perform the fourth operation.

18. The method according to any one of claims 1 to 17, wherein the cell detection operation is a cell detection operation for inter-frequency frequency range 2 (FR2).

19. A terminal, comprising:
a processing module configured to:
determine, based on first information, a detection capability and/or a detection behavior of the terminal;
wherein the first information is used for indicating a scanning capability of the terminal for scanning a received signal by using different receive beams; the detection capability is a capability of performing a cell detection operation; and the detection behavior is a behavior of performing the cell detection operation.

20. A terminal, comprising:
one or more processors;
wherein the terminal is configured to perform the method according to any one of claims 1 to 18.

21. A storage medium, wherein the storage medium stores instructions, and when the instructions run on a communication device, the communication device is caused to perform the method according to any one of claims 1 to 18.
